# EUROPÄISCHE PATENTANMELDUNG

(11) **EP 4 729 800 A1**
(43) Veröffentlichungstag der Anmeldung: **22.04.2026**
(21) Anmeldenummer: 25208011.4
(22) Anmeldetag: 10.10.2025
(51) Int. Cl.: F16D 65/12

(54) **VERFAHREN ZUR HERSTELLUNG EINER BREMSSCHEIBE**

(30) Priorität: 16.10.2024 DE 102024129996
(71) Anmelder: Breyden GmbH, 35236 Breidenbach (DE)
(72) Erfinder: Bellinghausen, Christian Alexander, 35759 Driedorf (DE); Barzen, Ingo, 42899 Remscheid (DE); Schreiner, Kilian, 35075 Gladenbach (DE); Glowatzki, Johannes, 35075 Gladenbach (DE); Feussner, Frank, 35083 Wetter (DE); Pfeiffer, Thomas, 35239 Steffenberg (DE); Wu, Kangjian, 35041 Marburg (DE)
(74) Vertreter: Patentanwälte Olbricht Buchhold Keulertz

(57) **Zusammenfassung**

Die Erfindung betrifft ein Verfahren zur Herstellung einer Bremsscheibe (1) umfassend ein Vorfertigen eines Basiskörpers (2) mit einer Nabenbefestigung (6) und einem Reibring (3) aus Metall, wobei die Nabenbefestigung (6) eine ringförmige Nabenanlagefläche (7) aufweist, wobei der Reibring (3) zwei sich gegenüberliegende, ringförmige Reibflächen (4, 5) aufweist, die um eine Rotationsachse (A) des Basiskörpers (2) verlaufen, durch Gießen des Basiskörpers (2) aus Metall, und optionalen Materialabtrag im Bereich der Reibflächen (4, 5) und/oder im Bereich der Nabenanlagefläche (7), derart, dass die ringförmigen Reibflächen (4, 5) eine radiale Steigung (W1) gegenüber der Nabenanlagefläche (7) aufweisen. Anschließend erfolgt ein Erzeugen einer Verschleißschutzschicht (10) auf einer oder auf beiden der Reibflächen (4, 5) derart, dass hierbei thermisch induzierte Spannungen die ringförmigen Reibflächen (4, 5) derart verformen, dass sich ein Absolutwert der radialen Steigung (W1) auf einen geringeren Absolutwert einer radialen Reststeigung (W2) reduziert.

## Beschreibung

Die Erfindung betrifft ein Verfahren zur Herstellung einer Bremsscheibe gemäß Anspruch 1.

Bremsscheiben, insbesondere aus Grauguss, sind aus dem Stand der Technik bekannt. Diese Bremsscheiben weisen einen Basiskörper mit einem Reibring auf, wobei der Reibring zwei sich gegenüberliegende, ringförmige Reibflächen aufweist. Um das Verschleißverhalten des aus Grauguss gefertigten Basiskörpers zu verbessern, ist es bekannt, die beiden Reibflächen mit einer durch Laserauftragschweißen aufgebrachten Verschleißschutzschicht zu versehen, die eine hohe Laufleistung der gefertigten Bremsscheibe gewährleistet. Dabei werden die zu beschichtenden Reibflächen an ihrer Oberfläche jeweils mittels einem Laserstrahl aufgeschmolzen und gleichzeitig zumindest ein Beschichtungspulver auf die aufgeschmolzene Reibfläche zugeführt, das bevorzugt vor Erreichen der aufgeschmolzenen Reibfläche von dem Laserstrahl zumindest teilverflüssigt wird, sodass eine stoffschlüssige Verbindung zwischen der Reibfläche und dem Beschichtungspulver und somit die Verschleißschutzschicht entsteht. Die mittels Laserauftragschweißen aufgebrachte Verschleißschutzschicht verfügt durch die stoffschlüssige Anbindung über eine hohe Schichthaftung und Delaminationsbeständigkeit.

Entsprechende Bremsscheiben sind beispielsweise von EP 3 034 902 A1, DE 10 2019 207 291 A1 und DE 10 2021 104 237 A1 beschrieben.

Nachteilhaft am Laserauftragschweißen ist eine Veränderung der Bremsscheibengeometrie durch den hohen Wärmeeintrag. Dabei verzieht sich der Reibring des Basiskörpers während des Laserauftragschweißens aufgrund von thermisch induzierter Spannung entweder in die Richtung der Reibfläche der Außenseite oder in die Richtung der Reibfläche der Innenseite der Bremsscheibe, je nach Reihfolge der Beschichtung der Reibflächen. Außerdem weist die Verschleißschutzschicht nach dem Laserauftragschweißen eine hohe Oberflächenrauheit von bis zu 100 µm auf. Daher wird die Verschleißschutzschicht im nächsten Prozessschritt beispielsweise mittels Schleifen geglättet, insbesondere derart, dass die Reibflächen orthogonal zur Rotationsachse der Bremsscheibe ausgerichtet sind. Der Verzug des Reibrings nach dem Laserauftragschweißen führt beim Glätten zu dem Nachteil, dass die Schichtdicke der Verschleißschutzschicht in der radialen Richtung stark unterschiedlich ausfällt. Das Ausgleichen des Verzugs beim Glätten trägt die Verschleißschutzschicht in radialer Richtung stark unterschiedlich ab.

Um den Verzug des Basiskörpers zu reduzieren ist von DE 10 2020 112 100 A1 vorgeschlagen, den Basiskörper vor dem Laserauftragschweißen auf eine Temperatur zwischen 100°C und 700°C vorzuwärmen. Nachteilhaft am Vorwärmen des Grauguss-Basiskörpers ist jedoch der zusätzliche Prozessschritt mit zusätzlichem Energie-, Kosten- sowie Zeitaufwand. Darüber hinaus können die beiden Reibflächen des Reibrings durch das Vorwärmen oxidieren, was die Haftung zwischen Reibring und Verschleißschutzschicht beeinträchtigt.

Aufgabe der Erfindung ist es, eine Bremsscheibe und/oder ein Verfahren zur Herstellung einer Bremsscheibe bereitzustellen, mit denen eine Verschleißschutzschicht auf den Reibflächen mit homogener Beschichtungsdicke bereitgestellt wird, die zudem eine hohe Schichthaftung und Delaminationsbeständigkeit aufweist. Das Herstellungsverfahren soll zuverlässig und kostengünstig durchführbar sein, sodass auch die Bremsscheiben kostengünstig gefertigt werden können.

Erfindungsgemäße Merkmale sind in Anspruch 1 angegeben. Ausgestaltungen sind Gegenstand der Ansprüche 2 bis 11.

Die Erfindung betrifft ein Verfahren zur Herstellung einer insbesondere beschichteten Bremsscheibe umfassend ein (a) Vorfertigen eines Basiskörpers mit einer Nabenbefestigung und mit einem Reibring aus Metall, insbesondere aus Grauguss, wobei die Nabenbefestigung eine ringförmige Nabenanlagefläche aufweist, wobei der Reibring zwei sich gegenüberliegende, ringförmige Reibflächen aufweist, die um eine Rotationsachse des Basiskörpers verlaufen, durch Gießen des Basiskörpers aus Metall, und durch optionalen Materialabtrag im Bereich der Reibflächen und/oder im Bereich der Nabenanlagefläche nach dem Gießen, derart, dass die ringförmigen Reibflächen eine radiale Steigung gegenüber der Nabenanlagefläche aufweisen. Anschließend erfolgt ein (b) Erzeugen einer Verschleißschutzschicht auf einer oder auf beiden der Reibflächen derart, dass hierbei thermisch induzierte Spannungen die ringförmigen Reibflächen derart verformen, dass sich ein Absolutwert der radialen Steigung auf einen geringeren Absolutwert einer radialen Reststeigung reduziert.

Vorteilhaft hieran ist, dass kein zusätzlicher Prozessschritt wie das bekannte Vorwärmen erfolgen muss. Entsprechend sicher, schnell und kostengünstig ist das Verfahren. Eine Oxidation des Basiskörpers und Beeinträchtigung der Haftung der Verschleißschutzschicht wie beim Vorwärmen ist ausgeschlossen. Etwaige Verzugsprobleme wie beim Laserauftragschweißen lassen sich effektiv beheben. Dadurch, dass mittels der radialen Steigung auf eine geringere Reststeigung hingewirkt wird, hat die Bremsscheibe bereits eine hohe Maßhaltigkeit nach dem Erzeugen der Verschleißschutzschicht. Eine etwaige materialabtragende Nachbearbeitung der Reibflächen kann homogener erfolgen, sodass eine homogene Schichtdicke der Verschleißschutzschicht verbleibt. Durch die Definition der Absolutwerte der Steigung wird auch der Prozessfall mit umfasst, bei dem sich die Reibflächen so stark verformen, dass das Vorzeichen der Steigung wechselt.

Technisch lässt sich die radiale Steigung durch den optionalen Materialabtrag im Bereich der Reibflächen, oder auch zusätzlich oder alternativ im Bereich der Nabenanlagefläche herstellen.

Gemäß einer näheren Ausgestaltung des Verfahrens ist vorgesehen, dass die radiale Reststeigung nach dem Erzeugen der Verschleißschutzschicht im Wesentlichen oder vollständig null Grad (insbesondere gegenüber der Nabenanlagefläche) beträgt, sodass die Reibflächen insbesondere im eingebauten Zustand der Bremsscheibe zumindest im Wesentlichen oder vollständig orthogonal zur Rotationsachse ausgerichtet sind. Damit wird erreicht, dass keine Nacharbeiten zur Korrektur der Geometrie der Reibflächen mehr erforderlich sind. Etwaige Nacharbeiten können sich zumindest im Wesentlichen auf Anpassungen der Oberflächenrauigkeit beschränken.

Im Speziellen kann vorgesehen sein, dass die Reibflächen jeweils eine Ringbreite mit einem Innenradius und einem Außenradius aufweisen, wobei die radiale Steigung der Reibflächen beim Vorfertigen des Basiskörpers derart ausgebildet ist, dass der Innenradius entlang einer orthogonalen Achse zur Nabenanlagefläche einen Versatz zum Außenradius aufweist, dessen Absolutwert zwischen 10 µm und 90 µm beträgt, vorzugsweise zwischen 30 µm und 70 µm beträgt. Die so ausgebildete radiale Steigung reicht in Praxis meistens aus, um den thermischen Verzug beim Erzeugen der Verschleißschutzschicht auszugleichen.

Des Weiteren kann verfahrensgemäß vorgesehen sein, dass die Reibflächen jeweils eine Ringbreite mit einem Innenradius und einem Außenradius aufweisen, wobei die radiale Reststeigung nach dem Erzeugen der Verschleißschutzschicht derart ausgebildet ist, dass der Innenradius in Richtung einer Achse orthogonal zur Nabenanlagefläche einen Versatz zum Außenradius aufweist, dessen Absolutwert kleiner als 50 µm ist, vorzugsweise kleiner als 30 µm ist. Entsprechend dem maximalen Versatz muss die Verschleißschutzschicht bei einer etwaigen Nachbearbeitung lokal maximal um diesen Wert abgetragen werden, um eine orthogonal zur Rotationsachse ausgerichtete Reibfläche zu erhalten.

In einer besonderen Verfahrensausgestaltung ist die radiale Steigung ein konstanter Winkel, oder ist die radiale Steigung stetig und wird mit zunehmendem Abstand von der Rotationsachse A steiler. Diese zwei Arten zur Definition der radialen Steigung kompensieren die zwei wesentlichen Verformungsbilder durch das Erzeugen der Verschleißschutzschicht. Die konstante Steigung eignet sich insbesondere dann, wenn die Ringfläche durch die thermischen induzierten Spannungen über die ganze Ringbreite kippt, bspw. weil sich die innenliegend angeordnete Nabenbefestigung verformt. Die stetige und nach außen steiler werdende, radiale Steigung kann schüsselartige Verformungen über der Breite des Reibrings kompensieren.

Optional umfasst das Erzeugen der Verschleißschutzschicht einen thermischen Beschichtungsprozess wie z.B. Laserauftragschweißen, bei dem die Verschleißschutzschicht auf den Basiskörper (insbesondere im Bereich der Reibflächen) aufgetragen wird, oder die Verschleißschutzschicht wird in einem thermischen Diffusionsprozess wie z.B. Nitrieren auf dem Basiskörper erzeugt (insbesondere im Bereich der Reibflächen).

Bevorzugt ist verfahrensgemäß, dass das Erzeugen der Verschleißschutzschicht durch Laserauftragschweißen erfolgt. Bei diesem Verfahren kommt es zu einem großen Wärmeeintrag in den Basiskörper mit thermisch bedingten Spannungen und Verzug, der sich verfahrensgemäß durch die radiale Steigung beim Vorfertigen ausgleichen lässt. Beim Laserauftragsschweißen sollte die zu beschichtende der beiden Reibflächen an ihrer Oberfläche mittels einem Laserstrahl aufgeschmolzen und ein Beschichtungspulver auf die aufgeschmolzene Reibfläche zugeführt werden. Vorzugsweise wird das Beschichtungspulver vor dem Erreichen der aufgeschmolzenen Reibfläche von dem Laserstrahl zumindest teilverflüssigt. Im Speziellen entsteht hierdurch eine stoffschlüssige Verbindung zwischen der Reibfläche und dem Beschichtungspulver und somit die Verschleißschutzschicht.

Optional kann das Verfahren ein (c) Glätten der Reibflächen, vorzugsweise durch Schleifen, nach dem Erzeugen der Verschleißschutzschicht umfassen, insbesondere derart, dass die Reibflächen orthogonal zur Rotationsachse ausgerichtet sind. Hierdurch kann zumindest die Oberflächenrauigkeit reduziert werden. Zudem lassen sich eine etwaige Fehlausrichtung und etwaige Höhenschläge der Reibflächen egalisieren.

Im Speziellen kann eine Schichtdicke der Verschleißschutzschicht auf einer oder auf beiden Reibflächen nach dem Glätten jeweils eine Schichtdickenschwankung von weniger als 50 % aufweisen, bevorzugt von weniger als 30 % aufweisen, wobei die Schichtdickenschwankung insbesondere durch Teilen der Differenz zwischen der maximalen und der minimalen Schichtdicke durch die minimale Schichtdicke definiert ist. Damit steht eine weitgehend homogene Verschleißschichtdicke zur Verfügung, die eine lange Lebensdauer mit geringer Feinstaubpartikelemission ermöglicht.

Die ringförmigen Reibflächen sollten beim Vorfertigen des Basiskörpers rotationssymmetrisch hergestellt werden. Damit sind sie näher an der Zielgeometrie, wobei über dem Umfang eher keine unterschiedlichen thermischen Verzüge beim Erzeugen der Verschleißschutzschicht zu erwarten sind, insbesondere nicht beim Laserauftragsschweißen. Des Weiteren sollten die ringförmigen Reibflächen beim Vorfertigen des Basiskörpers parallel zueinander ausgerichtet sein. Auch hierdurch ist der Reibring nahe an der Zielgeometrie.

Bei einer Verfahrensvariante ist vorgesehen, dass die ringförmigen Reibflächen und die Nabenanlagefläche beim Vorfertigen des Basiskörpers nach dem Gießen zumindest im Wesentlichen oder vollständig orthogonal zur Rotationsachse ausgerichtet sind und die radiale Steigung durch den (dann obligatorischen) Materialabtrag im Bereich der Reibflächen und/oder im Bereich der Nabenanlagefläche vergrößert oder ausschließlich hierdurch hergestellt wird. Das Verfahren ist hierdurch leicht anwendbar, wenn Gießformen bereits mit orthogonal ausgerichteten Reibflächen und Nabenanlagefläche existieren, denn das Materialabtragen lässt sich im Vergleich zu Gießformanpassungen leicht anpassen. Zusätzlich erlaubt das Anpassen des Materialabtragens Korrekturen der radialen Steigung bei der Fertigung im Rahmen einer Qualitätskontrolle.

Optional kann das Verfahren ein Überprüfen umfassen, insbesondere Messen (bspw. mit einem Messtaster), der radialen Reststeigung von zumindest einer der beiden Reibflächen nach dem Erzeugen der Verschleißschutzschicht und Korrektur der radialen Steigung beim Vorfertigen des nächsten Basiskörpers derart, dass dessen Reibfläche nach dem Erzeugen der Verschleißschutzschicht eine antizipierte radiale Reststeigung aufweisen, die kleiner ist als die radiale Reststeigung der überprüften Reibfläche. Der Vorteil der Überprüfung liegt in einer gesteigerten Prozesssicherheit in der Fertigung hinsichtlich der radialen Reststeigung der Reibflächen. Die Gussqualität und bspw. Werkzeugverschleiß beim optionalen Materialabtrag beim Vorfertigen wirken sich auf die radiale Steigung der Reibflächen beim Vorfertigen aus. Auch die Prozessparameter des Erzeugens der Verschleißschutzschicht können den thermischen Verzug der Reibfläche beeinflussen. Durch das Überprüfen der radialen Reststeigung wird eine vorzugsweise automatische Korrektur ermöglicht, indem man die Maschinenparameter zur Ausbildung der vorgehaltenen, radialen Steigung im Arbeitsschritt des Vorfertigens anpasst.

Ergänzend kann das Verfahren ein (a2) Erzeugen einer Zwischenschicht auf eine oder beide der Reibflächen vor dem Erzeugen der Verschleißschutzschicht umfassen. Mit solch einer Zwischenschicht lässt sich die Schichthaftung und Delaminationsbeständigkeit steigern.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine schematische Darstellung einer Bremsscheibe nach Vorfertigung eines Basiskörpers gemäß dem Stand der Technik;
- Fig. 1b: eine schematische Darstellung der Bremsscheibe nach Fig. 1a nach dem Erzeugen einer Verschleißschutzschicht auf den Reibflächen;
- Fig. 1c: eine schematische Darstellung der Bremsscheibe nach Fig. 1b nach einem Glätten der Reibflächen;
- Fig. 2a: eine schematische Darstellung einer Bremsscheibe nach Vorfertigung eines Basiskörpers gemäß der Erfindung;
- Fig. 2b: eine schematische Darstellung der Bremsscheibe nach Fig. 2a nach dem Erzeugen einer Verschleißschutzschicht auf den Reibflächen; und
- Fig. 2c: eine schematische Darstellung der Bremsscheibe nach Fig. 2b nach einem Glätten der Reibflächen.

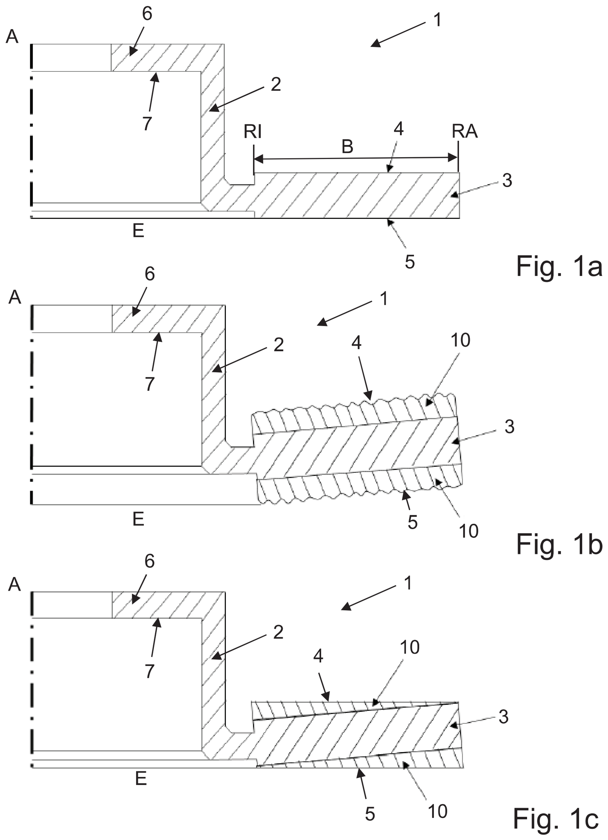

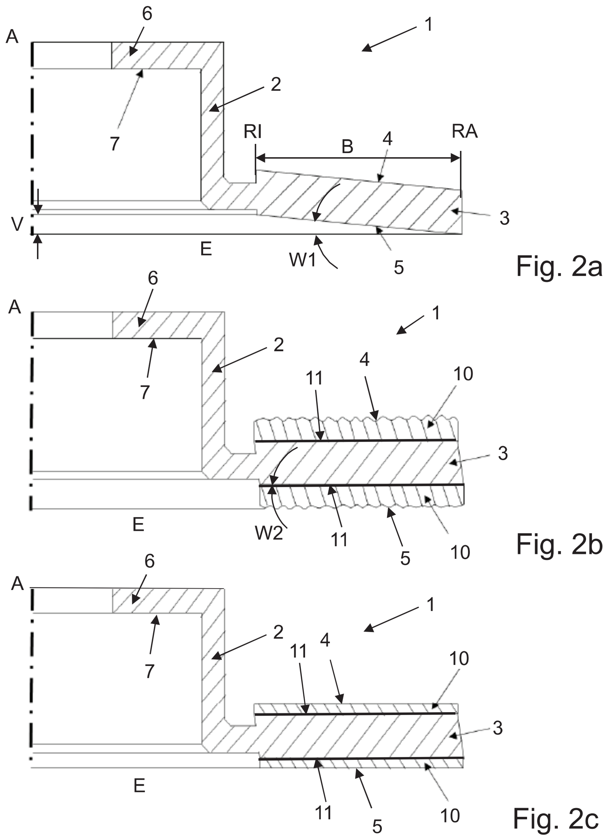

Die **Fig. 1a, 1b, 1c****,** **2a, 2b, 2c** zeigen jeweils eine schematische Darstellung einer Bremsscheibe 1. Es erfolgt daher zunächst eine gemeinsame Beschreibung der Figuren, wobei sich die Bezugsziffern auf die jeweils entsprechenden Merkmale beziehen. Die Bremsscheibe 1 weist einen Basiskörper 2 mit einem Reibring 3 aus Metall, vorzugsweise Gusseisen, auf. Der Reibring 3 hat zwei sich parallel gegenüberliegende, ringförmige Reibflächen 4, 5, die rotationssymmetrisch um eine (virtuelle) Rotationsachse A des Basiskörpers 2 verlaufen. Die ringförmigen Reibflächen 4, 5 haben jeweils eine Ringbreite B, die sich zwischen einem Innenradius RI und einem Außenradius RA erstreckt (Bezugszeichen nur in Fig. 1a und 2a).

Der Basiskörper 2 weist eine einteilig mit dem Reibring 3 ausgebildete Nabenbefestigung 6 mit einer orthogonal zur Rotationsachse A ausgerichteten Nabenanlagefläche 7 auf. Der Reibring 3 ist also an der Nabenbefestigung 6 angeordnet. Ebenfalls orthogonal zur Rotationsachse A ist eine (virtuelle) Ebene E ausgerichtet.

Der Basiskörper 2 der Bremsscheibe 1 gemäß **Fig. 1a** ist durch Gießen des Basiskörpers 2 aus Metall, und optionalen Materialabtrag im Bereich der Reibflächen 4, 5 derart hergestellt, dass die ringförmigen Reibflächen 4, 5 orthogonal zur Rotationsachse A bzw. parallel zur Ebene E ausgerichtet sind. Beim Erzeugen einer Verschleißschutzschicht 10 auf den beiden der Reibflächen 4, 5 mit einem wärmeeintragenden Verfahren, insbesondere durch Laserauftragsschweißen, kommt es wie in **Fig. 1b** dargestellt zu einer Verformung des Reibrings 3 aufgrund thermischer Spannungen. Der gesamte Reibring umfassend die Reibflächen 4, 5 und die Verschleißschutzschicht 10 bildet einen Winkel zur Ebene E aus. Über den Umfang betrachtet könnte die Reibflächen als flache Kegelstumpfmantelfläche beschrieben werden. Dieser Winkel lässt sich zwar durch Glätten der Reibflächen 4, 5, insbesondere der Verschleißschutzschicht 10 so ausgleichen, dass wieder parallel zur Ebene E ausgerichtete Reibflächen 4, 5 vorliegen, wie es in **Fig. 1c** gezeigt ist. Durch beispielsweise mikroskopische Untersuchungen lässt sich feststellen, dass die Verschleißschutzschicht 10 wie in Fig. 1c gezeigt erhebliche Schichtdickenunterschiede über der Reibringbreite B aufweist. Das kann im Einsatz dazu führen, dass die Verschleißschutzschicht 10 im dünneren Schichtdickenbereich bereits abgetragen ist und im dickeren Schichtdickenbereich noch wirksam. Es entstehen sodann bereits bei recht frühem Verschleißzustand ansteigende Feinstaubpartikelemissionen aus dem Bereich des Graugusses des Reibringes 3. Zudem wird ein zusammenwirkender Bremsklotz ungleichmäßig abgetragen, sodass die Reibfläche 4, 5 über der Lebenszeit anfängt relativ zur Ebene E zu kippen.

Erfindungsgemäß ist daher entsprechend der **Fig. 2a** vorgesehen, dass bei dem Herstellverfahren das Vorfertigen des Basiskörpers 2 mit dem Reibring 3 aus Metall derart erfolgt, dass nach dem Gießen des Basiskörpers 2 aus Metall, und dem optionalen Materialabtrag im Bereich der Reibflächen 4, 5, diese Reibflächen 4, 5 eine radiale Steigung W1 gegenüber der Nabenanlagefläche 7 (im Ausführungsbeispiel auch gegenüber der orthogonalen Ebene E) aufweisen. Diese radiale Steigung W1 wird basierend auf Erfahrungswerten derart gewählt, dass das anschließende Erzeugen der Verschleißschutzschicht 10 auf den beiden Reibflächen 4, 5 aufgrund der hierbei thermisch induzierten Spannungen zu einer Verformung derart führt, dass die radiale Steigung W1 der Reibflächen 4, 5 auf eine radiale Reststeigung W2 reduziert werden, die wie in **Fig. 2b** gezeigt möglichst null Grad zur Ebene E beträgt. Optional kann vor dem Erzeugen der Verschleißschutzschicht 10 noch eine Zwischenschicht 11 auf den Reibflächen 4, 5 erzeugt werden. Soweit diese zu thermischen Spannungen im Basiskörper 2 führen, so sind auch diese im Folgeschritt des Erzeugens der Verschleißschutzschicht 10 kompensierbar. Sie müssen hierfür nur bei der Definition der radialen Steigung W1 berücksichtigt werden.

In absoluten Werten zeigt sich bei der praktischen Vorfertigung vom Basiskörper 2, dass der Innenradius RI entlang einer orthogonalen Achse zur Nabenanlagefläche 7 (im Ausführungsbeispiel auch entlang der der Rotationsachse A) einen Versatz V zum Außenradius RA aufweisen sollte, der zwischen 10 µm und 90 µm beträgt, vorzugsweise zwischen 30 µm und 70 µm beträgt. Dabei muss die Steigung W1 zur Ausbildung dieses Versatzes nicht linear sein, denn die thermischen Spannungen führen nicht zwingend zu einer reinen Winkeländerung. Die Reibflächen 4, 5 gemäß Fig. 2a können zur Ausbildung der radialen Steigung W1 also durchaus eine Krümmung über die Ringbreite B aufweisen. Typischerweise sollte die radiale Steigung W1 dann stetig und vom Innenradius RI zum Außenradius RA ansteigend ausgebildet werden. Damit lässt sich einer eher schüsselartigen Verformung durch die thermischen Spannungen entgegenwirken. Die Nicht-Linearität kann daher zu einer besonders hohen Formtreue nach dem Erzeugen der Verschleißschutzschicht 10 führen. Technisch etwas einfacher umsetzbar ist eine Betrachtung, bei der die radiale Steigung W1 ein konstanter Winkel ist.

Die radiale Reststeigung W2 nach dem Erzeugen der Verschleißschutzschicht 10 beträgt vorzugsweise null Grad, und dies vorzugsweise zumindest im Wesentlichen linear über die Ringbreite B. Erfindungsgemäß sind jedoch auch nicht vollumfängliche Zielerreichungen umfasst. So kann es hinreichend sein, wenn der Innenradius RI entlang einer orthogonalen Achse zur Nabenanlagefläche (im Ausführungsbeispiel auch entlang der Rotationsachse A) nach dem Erzeugen der Verschleißschutzschicht 10 einen Versatz V zum Außenradius RA aufweist, der kleiner als 50 µm ist, vorzugsweise kleiner als 30 µm ist. Aufgrund der Schichtdicken der Verschleißschutzschicht 10, kann dies hinreichend für eine möglichst homogene Schichtdicke nach dem Glätten sein, wie es beispielhaft in **Fig. 2c** dargestellt ist. Dieses Ziel ist insbesondere auch dann erreicht, wenn die radiale Reststeigung W2 ein umgekehrtes Vorzeichen zur ausgehenden radialen Steigung W1 aufweist. In relativen Werten sollte die Schichtdicke D der Verschleißschutzschichten 10 auf den Reibflächen 4, 5 nach dem Glätten jeweils eine Schichtdickenschwankung von weniger als 50 % aufweisen, bevorzugt von weniger als 30 % aufweisen. Dies insbesondere, wenn die Schichtdickenschwankung durch Teilen der Differenz zwischen der maximalen und der minimalen Schichtdicke durch die minimale Schichtdicke definiert ist.

Optional können die ringförmigen Reibflächen 4, 5 und die Nabenanlagefläche 7 beim Vorfertigen des Basiskörpers 2 nach dem Gießen noch zumindest im Wesentlichen oder vollständig orthogonal zur Rotationsachse A ausgerichtet sein und die radiale Steigung W1 (wie in Fig. 2a dargestellt) erst durch den Materialabtrag im Bereich der Reibflächen 4, 5 vergrößert oder ausschließlich hierdurch hergestellt werden. Damit können bspw. bestehende Gussformen für das Verfahren genutzt werden. Durch den Materialabtrag ist man zudem sehr flexibel hinsichtlich der radialen Steigung W1 (bspw. linear oder nicht-lineare Steigung), dies insbesondere durch Kontrollen der radialen Reststeigung W2 und daraus folgenden Korrekturen der radialen Steigung W1 für die weiteren Produktionszyklen.

So kann das Verfahren insbesondere auch ein Überprüfen, insbesondere Messen (bspw. mit einem Messtaster), der radialen Reststeigung W2 von zumindest einer der beiden Reibflächen 4, 5 nach dem Erzeugen der Verschleißschutzschicht 10 sowie eine Korrektur der radialen Steigung W1' beim Vorfertigen des nächsten Basiskörpers 2' derart umfassen, dass dessen Reibflächen 4', 5' nach dem Erzeugen der Verschleißschutzschicht 10' eine antizipierte Reststeigung W2' aufweisen, die kleiner ist als diejenige der überprüften Reibfläche 4, 5.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Bremsscheibe | A | Rotationsachse |
| 2 | Basiskörper | B | Ringbreite |
| 3 | Reibring | E | orthogonale Ebene |
| 4 | Reibfläche | RI | Innenradius |
| 5 | Reibfläche | RA | Außenradius |
| 6 | Nabenbefestigung | W1 | radiale Steigung |
| 7 | Nabenanlagefläche | W2 | radiale Reststeigung |
| | | V | Versatz |
| 10 | Verschleißschutzschicht | | |
| 11 | Zwischenschicht | | |

## Patentansprüche

1. Verfahren zur Herstellung einer Bremsscheibe (1) umfassend die folgenden Schritte:
a) Vorfertigen eines Basiskörpers (2) mit einer Nabenbefestigung (6) und einem Reibring (3) aus Metall, wobei die Nabenbefestigung (6) eine ringförmige Nabenanlagefläche (7) aufweist, wobei der Reibring (3) zwei sich gegenüberliegende, ringförmige Reibflächen (4, 5) aufweist, die um eine Rotationsachse (A) des Basiskörpers (2) verlaufen, durch
a. Gießen des Basiskörpers (2) aus Metall, und
b. optionalen Materialabtrag im Bereich der Reibflächen (4, 5) und/oder im Bereich der Nabenanlagefläche (7);
derart, dass die ringförmigen Reibflächen (4, 5) eine radiale Steigung (W1) gegenüber der Nabenanlagefläche (7) aufweisen; und
b) Erzeugen einer Verschleißschutzschicht (10) auf einer oder auf beiden der Reibflächen (4, 5) derart, dass hierbei thermisch induzierte Spannungen die ringförmigen Reibflächen (4, 5) derart verformen, dass sich ein Absolutwert der radialen Steigung (W1) auf einen geringeren Absolutwert einer radialen Reststeigung (W2) reduziert.

2. Verfahren nach Anspruch 1, wobei die radiale Reststeigung (W2) nach dem Erzeugen der Verschleißschutzschicht (10) im Wesentlichen oder vollständig null Grad beträgt, sodass die Reibflächen (4, 5) zumindest im Wesentlichen oder vollständig orthogonal zur Rotationsachse (A) ausgerichtet sind.

3. Verfahren nach einem der Ansprüche 1 oder 2, wobei die Reibflächen (4, 5) jeweils eine Ringbreite (B) mit einem Innenradius (RI) und einem Außenradius (RA) aufweisen, wobei die radiale Steigung (W1) der Reibflächen (4, 5) beim Vorfertigen des Basiskörpers (2) derart ausgebildet ist, dass der Innenradius (RI) entlang einer orthogonalen Achse zur Nabenanlagefläche (7) einen Versatz (V) zum Außenradius (RA) aufweist, dessen Absolutwert zwischen 10 µm und 90 µm beträgt, vorzugsweise zwischen 30 µm und 70 µm beträgt.

4. Verfahren nach einem der vorhergehenden Ansprüche, wobei die Reibflächen (4, 5) jeweils eine Ringbreite (B) mit einem Innenradius (RI) und einem Außenradius (RA) aufweisen, wobei die radiale Reststeigung (W2) nach dem Erzeugen der Verschleißschutzschicht (10) derart ausgebildet ist, dass der Innenradius (RI) entlang einer orthogonalen Achse zur Nabenanlagefläche (7) einen Versatz (V) zum Außenradius (RA) aufweist, dessen Absolutwert kleiner als 50 µm ist, vorzugsweise kleiner als 30 µm ist.

5. Verfahren nach einem der vorhergehenden Ansprüche, wobei die radiale Steigung (W1) ein konstanter Winkel ist, oder die radiale Steigung (W1) stetig ist und mit zunehmendem Abstand von der Rotationsachse (A) steiler wird.

6. Verfahren nach einem der vorhergehenden Ansprüche, wobei das Erzeugen der Verschleißschutzschicht (10) durch Laserauftragschweißen erfolgt.

7. Verfahren nach einem der vorhergehenden Ansprüche, umfassend den folgenden Schritt:
c) Glätten der Reibflächen (4, 5) nach dem Erzeugen der Verschleißschutzschicht (10).

8. Verfahren nach Anspruch 7, wobei eine Schichtdicke (D) der Verschleißschutzschicht (10) auf einer oder auf beiden Reibflächen (4, 5) nach dem Glätten jeweils eine Schichtdickenschwankung von weniger als 50 % aufweist, bevorzugt von weniger als 30 % aufweist.

9. Verfahren nach einem der vorhergehenden Ansprüche, wobei die ringförmigen Reibflächen (4, 5) und die Nabenanlagefläche (7) beim Vorfertigen des Basiskörpers (2) nach dem Gießen zumindest im Wesentlichen oder vollständig orthogonal zur Rotationsachse (A) ausgerichtet sind und die radiale Steigung (W1) durch den Materialabtrag im Bereich der Reibflächen (4, 5) und/oder im Bereich der Nabenanlagefläche (7) vergrößert oder ausschließlich hierdurch hergestellt wird.

10. Verfahren nach einem der vorhergehenden Ansprüche, umfassend den folgenden Schritt:
d) Überprüfen der radialen Reststeigung (W2) von zumindest einer der beiden Reibflächen (4, 5) nach dem Erzeugen der Verschleißschutzschicht (10) und Korrektur der radialen Steigung (W1') beim Vorfertigen des nächsten Basiskörpers (2') derart, dass dessen Reibfläche (4', 5') nach dem Erzeugen der Verschleißschutzschicht (10') eine antizipierte radiale Reststeigung (W2') aufweisen, die kleiner ist als die radiale Reststeigung (W2) der überprüften Reibfläche (4, 5).

11. Verfahren nach einem der vorhergehenden Ansprüche, umfassend den folgenden Schritt:
a2) Erzeugen einer Zwischenschicht (11) auf eine oder beide der Reibflächen (4, 5) vor dem Erzeugen der Verschleißschutzschicht (10).
